# EUROPÄISCHE PATENTSCHRIFT

(11) **EP 0 684 178 B1**
(45) Veröffentlichungstag und Bekanntmachung des Hinweises auf die Patenterteilung: **23.09.1998**
(21) Anmeldenummer: 95250116.1
(22) Anmeldetag: 16.05.1995
(51) Int. Cl.: B62D 25/18, B62D 25/16

(54) **Formteilanordnung am Radausschnitt eines Personenkraftwagens**
Arrangement of a shaped assembly-part on the fender of a motor car
Aménagement d'une pièce préformée pour le garde-boue d'un véhicule automobile

(30) Priorität: 27.05.1994 DE 4419378
(43) Veröffentlichungstag der Anmeldung: 29.11.1995
(73) Patentinhaber: Arenhold, Knut, D-22605 Hamburg (DE)
(72) Erfinder: Arenhold, Knut, D-22605 Hamburg (DE)
(74) Vertreter: UEXKÜLL & STOLBERG

(56) Entgegenhaltungen:
- FR-A- 736 027
- US-A- 2 282 443
- PATENT ABSTRACTS OF JAPAN vol. 009 no. 313 (M-437) ,10.Dezember 1985 & JP-A-60 148777 (KINUGAWA GOMU KOGYO KK) 6.August 1985,

## Beschreibung

Die Erfindung bezieht sich auf eine Formteilanordnung am Radausschnitt eines Personenkraftwagens, die sich über mindestens ein Drittel, vorzugsweise mindestens zwei Drittel der Länge der den Radausschnitt begrenzenden Kante der Karosserie erstreckt und mit einem Außenbereich über die äußere, den Radausschnitt begrenzende Kante nach außen vorsteht.

Bekannte Formteilanordnungen dieser Art, die sich im Verlauf des gesamten Radausschnittes erstrecken und beispielsweise dazu dienen sollen, den Radkasten zumindest optisch zu verbreitern sowie einen gewissen Schutz gegen das Anschlagen von Türen benachbart geparkter Fahrzeuge zu bewirken, bestehen üblicherweise aus einem Spritzgußteil, einem Tiefziehteil oder einem Preßteil, das für den jeweiligen Typ des Personenkraftwagens speziell angefertigt wurde und einen im wesentlichen starren Aufbau hat. Diese Formteilanordnungen sind daher verhältnismäßig teuer, da einerseits die Radausschnitte unterschiedlicher Typen von Personenkraftwagen im allgemeinen unterschiedlich geformt sind, so daß Formteilanordnungen für einen Typ eines Personenkraftwagens nicht auf einen anderen Typ eines Personenkraftwagens passen, und da andererseits für einen Personenkraftwagen auch noch unterschiedlich geformte Formteilanordnungen benötigt werden, wobei sich Formteilanordnungen für rechte und linke Radausschnitte, aber auch für vordere und hintere Radausschnitte unterscheiden, also erhebliche Formkosten investiert werden müssen, um die bekannten Formteilanordnungen allein für Personenkraftwagen eines einzigen Typs herzustellen.

Darüberhinaus sind die bekannten Formteilanordnungen sehr sperrig und benötigen verhältnismäßig großen Lagerraum, wobei die Lagerhaltung zusätzlich dadurch verteuert wird, daß, wie vorstehend erwähnt, für unterschiedliche Typen von Personenkraftwagen unterschiedlich geformte Formteilanordnungen zur Verfügung gestellt werden müssen.

Es ist ferner bereits eine am Radausschnitt eines Personenkraftwagens anbringbare Formteilanordnung bekannt (JP-A-60-148 777), die einen streifenförmigen Abschnitt aufweist, der an der den Radausschnitt begrenzenden Kante der Karosserie befestigt wird und der in seinem hinteren Bereich abgestuft ist und von einem Formteilabschnitt überdeckt wird, der einerseits einen Schmutzfängerlappen bildet und der andererseits einen sich nach hinten erstreckenden Abschnitt aufweist, der seitlich am dem Radausschnitt benachbarten Karosseriebereich befestigt ist.

Es ist Aufgabe der Erfindung, eine Formteilanordnung zum Schutz der Karosserie eines Personenkraftwagens gegen das Anschlagen von Türen benachbart geparkter Fahrzeuge u.ä. zu schaffen, die sich einfach und preiswert herstellen läßt und die bei geringen Formkosten die Ausrüstung von unterschiedlichen Typen von Personenkraftwagen ermöglicht.

Zur Lösung dieser Aufgabe wird eine Formteilanordnung am Radausschnitt eines Personenkraftwagens vorgeschlagen, die sich über mindestens ein Drittel, vorzugsweiwe zwei Drittel der Länge der den Radausschnitt begrenzenden Kante der Karosserie erstreckt, die mit einem Außenbereich über die äußere, den Radausschnitt begrenzende Kante nach außen vorsteht und die aus streifenförmigen Abschnitten aus elastisch verformbarem Material zusammengesetzt ist, die mit ihren benachbarten Enden einander überdeckend angeordnet sind und in Richtung ihrer Längserstreckung eine Krümmung mit der Krümmungsmittellinie im wesentlichen parallel zur Drehachse des zugehörigen Rades aufweisen. Vorzugsweise erstreckt sich die Formteilanordnung über die gesamte den Radausschnitt begrenzende Kante.

Durch die Ausbildung der erfindungsgemäßen Formteilanordnung aus streifenförmigen Abschnitten, die mit ihren benachbarten Enden einander überdeckend angeordnet sind, wobei sich die Materialstärke der Abschnitte in ihren Endbereichen vorzugsweise zum freien Ende hin verringert, wodurch auch die einander überdeckenden Endbereiche eine Gesamt-Materialstärke erhalten, die derjenigen der einzelnen streifenförmigen Abschnitte in ihren Mittelbereichen entspricht, lassen sich mit einem deutlich verringerten Aufwand an Formkosten und ohne besondere Anpassung an unterschiedliche Fahrzeugtypen Formteilanordnungen der gewünschten Art ausbilden. Da dabei die Abschnitte aus elastisch verformbarem Material hergestellt sind und sie eine vorgeformte Krümmung in Richtung ihrer Längserstreckung aufweisen, können diese in gewissem Umfang vorgebogenen Abschnitte unter verhältnismäßig geringer Verformung an im wesentlichen allen in der Praxis vorkommenden Formen von Radausschnitten befestigt werden, indem man sie zusätzlich zu ihrer Vorverformung nur noch geringfügig elastisch verformt und sie dadurch bei der Montage an die genaue Form des abzudeckenden Bereichs des Radausschnittes anpaßt. Dabei hat sich gezeigt, daß ein Radius der vorgeformten Krümmung des Mittelbereiches, also dem Bereich in der Mitte zwischen radial äußerem Rand und radial innerem Rand jedes Abschnittes von 300 mm bis 380 mm, insbesondere 320 mm bis 360 mm sehr vorteilhaft ist. Mit einem derartigen Krümmungsradius von 340 mm lassen sich beispielsweise bei mehr als 80 % aller z.Zt. auf dem europäischen Markt erhältlichen Personenkraftwagen unter Verwendung gleich geformter Abschnitte an allen vier Radausschnitten Formteilanordnungen anbringen.

Ein besonders einfacher Aufbau ergibt sich, wenn alle Abschnitte der Formteilanordnung die gleiche Form haben, da dann mit einer einzigen Form von Abschnitten praktisch alle in der Praxis erforderlichen Formteile erhalten werden können. Man kann jedoch zusätzlich End-Abschnitte benutzen, deren im montierten Zustand freies Ende eine sich verringernde Materialstärke und/oder sich verringernde Breite und/oder eine Abrundung aufweisen kann, wobei dann ein End-Abschnitt einer Form an der linken Seite des Fahrzeuges das vordere Ende und an der rechten Seite des Fahrzeuges das hintere Ende einer Formteilanordnung und umgekehrt bilden kann.

Da die Formteilanordnung mit einem Bereich seitlich nach außen über die äußere, den Radausschnitt begrenzende Kante der Karosserie des Personenkraftwagens vorsteht, ergibt sich ein wirksamer Schutz gegen das Anschlagen von Türen benachbart geparkter Fahrzeuge, die wegen der Ausbildung der Abschnitte der Formteilanordnung aus elastischem Material beim Anschlagen an diese ebenfalls praktisch nicht beschädigt werden.

Die Anbringung der Formteilanordnung am Kraftfahrzeug kann beispielsweise durch Klebung erfolgen.

Um die erfindunggemäße Formteilanordnung zusätzlich auch noch zu benutzen, um den Austritt von Spritzwasser seitlich aus dem Radkasten zu vermeiden, kann die Formteilanordnung eine dem Rad zugewandte Fläche aufweisen, die bezogen auf die Längsmittelebene des Personenkraftwagens eine weiter außen liegende Stelle in einem kleineren Abstand von der Drehachse des Rades als eine weiter innen liegende Stelle hat.

Die Erfindung wird im folgenden anhand der schematisch ein Ausführungsbeispiel zeigenden Figuren näher erläutert.
- Figur 1: zeigt in einer schematischen Teil-Seitenansicht den hinteren linken Radausschnitt eines Personenkraftwagens.
- Figur 2: zeigt in einer Teildarstellung den Radausschnitt gemäß Figur 1 schräg von hinten.
- Figur 3: zeigt einen Schnitt durch den Randbereich des Radausschnittes gemäß Figuren 1 und 2 und durch den maximalen Querschnitt aufweisenden Bereich der an ihm angebrachten Formteilanordnung.
- Figur 4: zeigt in einer Darstellung entsprechend Figur 3 einen Schnitt durch die Formteilanordnung im freien Endbereich eines End-Abschnittes der Formteilanordnung.

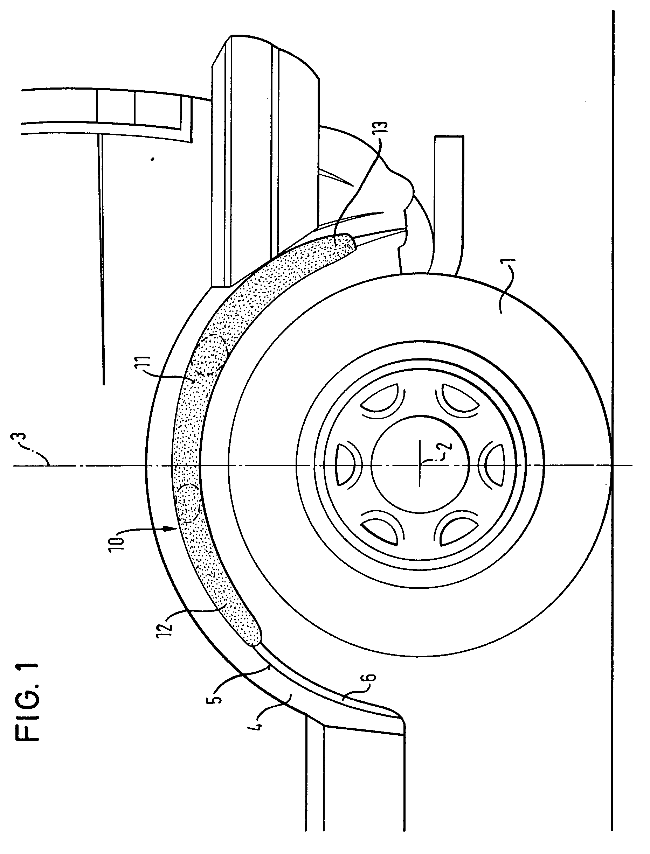

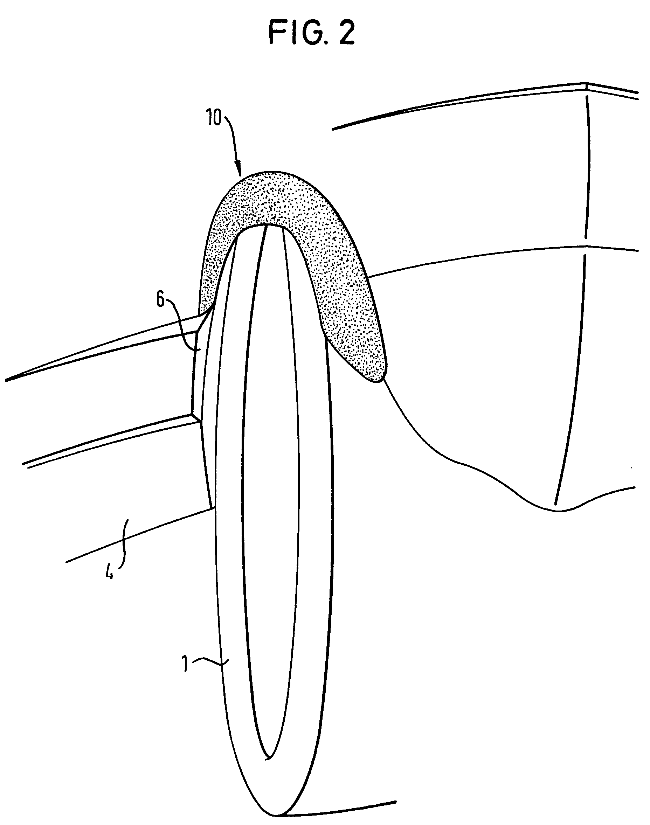

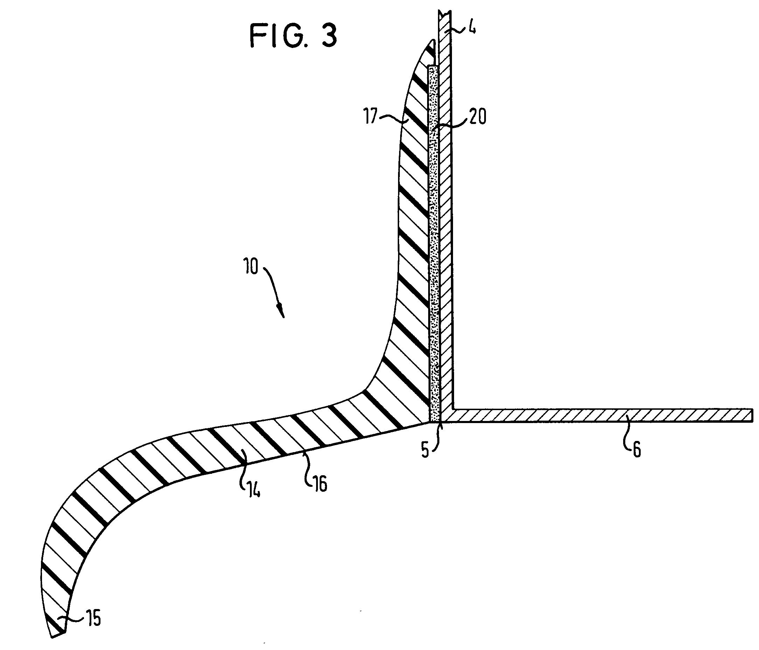

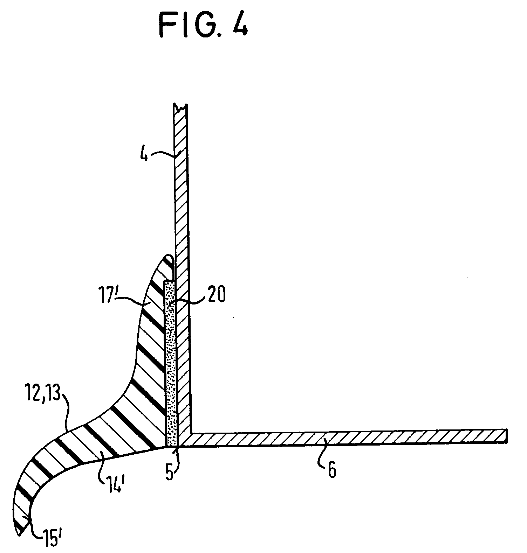

Der in den Figuren 1 und 2 dargestellte Bereich eines Personenkraftwagens zeigt schematisch das linke Hinterrad 1, das um seine Drehachse 2 drehbar ist und das sich innerhalb eines von der Karosserie gebildeten Radkastens befindet, der einen in Figur 1 erkennbaren Radausschnitt aufweist. Dieser Radausschnitt wird von einer Karosseriekante 5 begrenzt, an die sich nach außen die Seitenwand 4 anschließt und von der sich nach innen der übliche Kotflügelfalz 6 erstreckt, der in den Figuren 3 und 4 deutlicher zu erkennen ist und der mit der Seitenwand 4 im allgemeinen einen stumpfen Winkel einschließt.

Im Bereich des Radausschnittes ist an der Karosserie eine Formteilanordnung 10 befestigt, die sich zu beiden Seiten der Senkrechten 3 durch die Drehachse 2 des Rades 1 erstreckt und deutlich mehr als ein Drittel der Karosseriekante 5 bedeckt. Wie in Figur 1 angedeutet, besteht die Formteilanordnung 10 aus einem mittleren Abschnitt 11, einem vorderen End-Abschnitt 12 und einem hinteren End-Abschnitt 13. Die benachbarten Endbereiche der Abschnitte 11, 12, 13 haben eine sich zu ihren freien Enden hin verringernde Materialstärke und sind abgerundet. Auf diese Weise überdecken sich die benachbarten Enden, so daß sich eine im wesentlichen durchgehende Fläche ergibt.

Die Abschnitte 11, 12, 13, die üblicherweise aus elastisch verformbarem Kunststoff bestehen, können eine Querschnittsform haben, wie sie in den Figuren 3 und 4 angedeutet ist. Ein derartiger Abschnitt hat einen nach oben gerichteten Steg 17, dessen oberes Ende den äußeren radialen Rand des Abschnittes bildet. Der Steg 17 ist mittels einer Klebstoffschicht 20 an der Seitenwand 4 der Karosserie befestigt ist und an seinem freien oberen Endbereich eine Lippe aufweist, die bei dieser Befestigung zur direkten Anlage an der Seitenwand 4 kommt. Das untere Ende des Steges 17 endet an der Kante 5 der Karosserie. Vom Steg 17 erstreckt sich nach außen ein Bereich 14, dessen freier Endbereich 15 in Richtung auf die Drehachse 2 des Rades 1 abgebogen ist und dessen unteres Ende den radial inneren Rand des Abschnittes bildet, wobei die der Drehachse 2 zugewandte Fläche 16 schräg von innen nach außen verläuft und sich dabei der Drehachse 2 mehr annähert. Diese Form der Fläche 16 verhindert den seitlichen Austritt von Spritzwasser aus dem Radkasten.

Der über die Seitenwand 4 seitlich nach außen vorstehende Bereich 14 der Abschnitte 11, 12, 13 der Formteilanordnung 10 bildet einen wirksamen Schutz des Begrenzungsbereiches des Radausschnittes.

Während die Formteilanordnung 10 gemäß Figur 1 nur einen mittleren Abschnitt 11 aufweist, können auch mehrere streifenförmige Abschnitte 11 vorgesehen sein, die alle gleiche Form haben und die zur Bildung einer einen noch größeren Bereich des Radausschnittes überdeckenden Formteilanordnung mit ihren Enden einander überdeckend befestigt sein können.

Die End-Abschnitte 12 und 13 haben die gleiche Querschnittsform wie der Abschnitt 11, und sie sind auch in der gleichen Weise befestigt. Zu den freien Enden der Formteilanordnung können sie jedoch sich bezüglich der Breite und der Materialstärke verjüngend ausgebildet sein, so daß sich eine Verringerung der Abmessung des Bereiches 14 in Richtung der Abmessungsverringerung des Bereiches 14' gemäß Figur 4 und eine Verringerung der Abmessung des Steges 17 in Richtung der Abmessungsverringerung des Steges 17' gemäß Figur 4 ergibt, der End-Abschnitt 12, 13 also verjüngend ausläuft. Dadurch erhält man einen optisch ansprechenden Eindruck der gesamten Formteilanordnung.

Die Abschnitte 11, 12, 13 werden mit einer gewissen leichten Krümmung, beispielsweise von 300 mm bis 380 mm des Mittelbereichs zwischen radial innerem und radial äußerem Rand hergestellt, so daß sie der zu erwartenden Krümmung des Radausschnittes um die Drehachse 2 des Rades 1 bereits etwas angepaßt sind. Beim Montieren können die Abschnitte dann durch weitere elastische Verformung in die tatsächlich gewünschte und erforderliche Form gebracht werden, so daß sich aus Abschnitten 11 einer Form und gegebenenfalls entsprechend ausgebildeten End-Abschnitten 12, 13 Formteilanordnungen für zumindest eine große Anzahl von unterschiedlichen Typen von Personenkraftwagen mit unterschiedlich geformten Radausschnitten herstellen lassen.

## Patentansprüche

1. Formteilanordnung (10) am Radausschnitt eines Personenkraftwagens, die sich über mindestens ein Drittel, vorzugsweise mindestens zwei Drittel der Länge der den Radausschnitt begrenzenden Kante (5, 6) der Karosserie erstreckt, die mit einem Außenbereich (14) über die äußere, den Radausschnitt begrenzende Kante (5) nach außen vorsteht und die aus streifenförmigen Abschnitten (11, 12, 13) aus elastisch verformbarem Material zusammengesetzt ist, die mit ihren benachbarten Enden einander überdeckend angeordnet sind und in Richtung ihrer Längserstreckung eine Krümmung mit der Krümmungsmittellinie im wesentlichen parallel zur Drehachse (2) des zugehörigen Rades (1) aufweisen.

2. Formteilanordnung nach Anspruch 1, gekennzeichnet durch einen Krümmungsradius des Mittelbereichs des Abschnitts (11, 12, 13) von 300 mm bis 380 mm, vorzugsweise 320 mm bis 360 mm.

3. Formteilanordnung nach Anspruch 1 oder 2, gekennzeichnet durch die Erstreckung über die gesamte den Radausschnitt begrenzende Kante (5).

4. Formteilanordnung nach einem der Ansprüche 1 bis 3, dadurch gekennzeichnet, daß sich die Materialstärke der Abschnitte (11, 12, 13) zu ihren Endbereichen hin verringert.

5. Formteilanordnung nach einem der Ansprüche 1 bis 4, dadurch gekennzeichnet, daß alle Abschnitte (11) die gleiche Form haben.

6. Formteilanordnung nach einem der Ansprüche 1 bis 4, dadurch gekennzeichnet, daß die freien Enden der End-Abschnitte (12, 13) einen sich zum freien Ende verjüngenden Querschnitt haben.

7. Formteilnaordnung nach einem der Ansprüche 1 bis 6, gekennzeichnet durch einen Teilbereich (17), der an der an die den Radausschnitt begrenzende Kante (5) anschließenden Außenfläche (4) der Karosserie anliegt.

8. Formteilanordnung nach einem der Ansprüche 1 bis 7, gekennzeichnet durch eine Befestigung durch Klebung.

9. Formteilanordnung nach einem der Ansprüche 1 bis 8, gekennzeichnet durch eine dem Rad (1) zugewandte Fläche (16), die bezogen auf die Längsmittelebene des Personenkraftwagens eine weiter außen liegende Stelle in einem kleineren Abstand von der Drehachse (2) des Rades (1) als eine weiter innen liegende Stelle hat.

## Claims

1. Moulded article arrangement (10) at the wheel opening of a passenger vehicle which extends over at least one-third, preferably at least two-thirds of the length of the rim (5, 6) of the body delimiting the wheel opening, which projects outwards with an outer zone (14) over the outer rim (5) delimiting the wheel opening and which is comprised of strip-like sections (11, 12, 13) of elastically deformable material which are arranged with their neighbouring ends covering one another and which have, in the direction of their longitudinal extension, a curvature with the curvature centre line essentially parallel to the axis of rotation (2) of the associated wheel (1).

2. Moulded article arrangement according to claim 1, characterized by a curvature radius of the middle zone of the section (11, 12, 13) of 300 mm to 380 mm, preferably 320 mm to 360 mm.

3. Moulded article arrangement according to claim 1 or 2, characterized by the extension over the whole of the rim (5) delimiting the wheel opening.

4. Moulded article arrangement according to one of claims 1 to 3, characterized in that the material thickness of the sections (11, 12, 13) reduces towards their end-zones.

5. Moulded article arrangement according to one of claims 1 to 4, characterized in that all the sections (11) have the same shape.

6. Moulded article arrangement according to one of claims 1 to 4, characterized in that the free ends of the end-sections (12, 13) have a cross-section narrowing towards the free end.

7. Moulded article arrangement according to one of claims 1 to 6, characterized by a part-zone (17) which rests against the outer surface (4) of the body connecting to the rim (5) delimiting the wheel opening.

8. Moulded article arrangement according to one of claims 1 to 7, characterized by a securing by means of gluing.

9. Moulded article arrangement according to one of claims 1 to 8, characterized by a surface (16) facing the wheel (1) which, relative to the longitudinal central plane of the passenger vehicle, occupies a position lying further out at a smaller distance from the axis of rotation (2) of the wheel (1) than a position lying further in.

## Revendications

1. Ensemble de pièce préformée (10) pour le passage de roue d'une voiture particulière, ensemble qui s'étend sur au moins un tiers, de préférence au moins deux tiers de la longueur de l'arête (5, 6) de la carrosserie délimitant le passage de roue, qui dépasse vers l'extérieur, par une région extérieure (14), de l'arête extérieure (5) délimitant le passage de roue, et qui est constitué de parties en forme de bandes (11, 12, 13) en matériau élastiquement déformable, qui sont disposées en recouvrement mutuel par leurs extrémités voisines et présentent, dans la direction de leur développement longitudinal, une courbure dont l'axe médian est sensiblement parallèle a l'axe de rotation (2) de la roue associée (1).

2. Ensemble de pièce préformée selon la revendication 1, caractérisé par un rayon de courbure de la région médiane de la partie (11, 12, 13) de 300 mm a 380 mm, de préférence de 320 mm à 360 mm.

3. Ensemble de pièce préformée selon la revendication 1 ou 2, caractérisé par le fait qu'il s'étend sur la totalité de l'arête (5) délimitant le passage de roue.

4. Ensemble de pièce préformée selon l'une quelconque des revendications 1 a 3, caractérisé en ce que l'épaisseur de matériau des parties (11, 12, 13) diminue en direction de leurs régions terminales.

5. Ensemble de pièce préformée selon l'une quelconque des revendications 1 à 4, caractérisé en ce que toutes les parties (11) ont la même forme.

6. Ensemble de pièce préformée selon l'une quelconque des revendications 1 a 4, caractérisé en ce que les extrémités libres des parties terminales (12, 13) possèdent une section se rétrécissant vers l'extrémité libre.

7. Ensemble de pièce préformée selon l'une quelconque des revendications 1 a 6, caractérisé par une région partielle (17), qui s'applique contre la face extérieure (4) de la carrosserie qui se raccorde à l'arête (5) délimitant le passage de roue.

8. Ensemble de pièce préformée selon l'une quelconque des revendications 1 a 7, caractérisé par une fixation par collage.

9. Ensemble de pièce préformée selon l'une quelconque des revendications 1 à 8, caractérisé par une face (16) tournée vers la roue (1) dont, par rapport au plan médian longitudinal de la voiture particulière, un point situé plus à l'extérieur est moins éloigné de l'axe de rotation (2) de la roue (1) qu'un point situé plus à l'intérieur.
